# EUROPEAN PATENT SPECIFICATION

(11) **EP 2 807 022 B1**
(45) Date of publication and mention of the grant of the patent: **20.06.2018**
(21) Application number: 13740908.2
(22) Date of filing: 28.01.2013
(51) Int. Cl.: B32B 1/02, B65D 30/10, B32B 37/06, B32B 37/10, A45C 3/00, A45C 13/36

(54) **THREE-DIMENSIONAL BAG WITH AFFIXED SEAMS**
DREIDIMENSIONALER BEUTEL MIT ANGEKLEBTEN NÄHTEN
SAC TRIDIMENSIONNEL À COUTURES COLLÉES

(30) Priority: 26.01.2012 US 201213358931
(43) Date of publication of application: 03.12.2014
(73) Proprietor: NIKE Innovate C.V., Beaverton, OR 97005-6453 (US)
(72) Inventor: CROSS, Tory M., Beaverton, OR 97005 (US); HOLT, Scott C., Beaverton, OR 97005 (US)
(74) Representative: Beattie, Alex Thomas Stewart
(86) International application number: PCT/US2013/023434
(87) International publication number: WO 2013/112992

(56) References cited:
- GB-A- 2 326 085
- US-A- 4 909 017
- US-A1- 2001 004 058
- US-A1- 2002 133 919
- US-A1- 2004 013 834
- US-A1- 2004 213 959
- US-A1- 2006 117 600
- US-A1- 2011 312 228
- US-B2- 7 207 426

## Description

### FIELD OF THE INVENTION

The present invention relates to a three-dimensional structure composed of pliable elements that may be assembled in two dimensions. More particularly, the present invention relates to a bag with welded seams.

### BACKGROUND OF THE INVENTION

The process of constructing a bag, or any three-dimensional structure composed of pliable elements, is often done by sewing together pieces of material. To sew the pieces together, the bag may be turned inside out, the seams sewn together, and the bag turned right-side out. Whether turned inside out or not, the assembly of the structure requires three-dimensional manipulation. As well, the stitched together seams may be prone to ripping and have limited resistance to oil, water, and other liquids or fine particulates.

GB 2 326 085 discloses a dirty-washing container.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The present invention is defined by the claims.

The present invention relates to a three-dimensional structure composed of pliable elements and, more particularly, a bag. The structure comprises a bottom panel with a longitudinal axis, a first end panel with a vertical axis, and at least one affixing element that joins the bottom panel with the end panel. More specifically, the bottom panel comprises a first longitudinal side that extends generally along the longitudinal axis, a second longitudinal side that extends generally along the longitudinal axis, and a first terminal bottom portion. The first terminal bottom portion comprises a first edge segment, a second edge segment, and a third edge segment. The first edge segment extends from the first longitudinal side at a first inner angle, the second edge segment extends from the second longitudinal side at a second inner angle, and the third edge segment connects the first edge segment with the second edge segment. Note that the term "bottom" is used for convenience in describing. The panel may ultimately be a top panel, a side panel, etc.

Continuing, the first end panel comprises a first vertical side that extends generally along the vertical axis, a second vertical side that extends generally along the vertical axis, and a terminal end portion which comprises a first edge segment, a second edge segment, and a third edge segment. The first edge segment extends from the first vertical side at a first inner angle, the second edge segment extends from the second vertical side at a second inner angle, and the third edge segment connects the first edge segment with the second edge segment. The term "end" is used for convenience in describing; the panel may ultimately be a bottom panel, a top panel, etc.

Likewise, the at least one affixing element joins the first edge segment of the first terminal bottom portion to the first edge segment of the terminal end portion, the second edge segment of the first terminal bottom portion to the second edge segment of the terminal end portion, and the third edge segment of the first terminal bottom portion with the third edge segment of the terminal end portion.

Examples of the present invention are also directed toward a method to make a bag. The method comprises cutting a bottom panel having a longitudinal axis and a first terminal bottom portion, cutting an end panel having a vertical axis and a terminal end portion, cutting a thermoplastic elastomer strip or bumper, and thermally welding the first terminal bottom portion to the terminal end portion by heating the thermoplastic elastomer strip. In turn, the bottom panel comprises a first longitudinal side that is substantially parallel to the longitudinal axis, a second longitudinal side that is substantially parallel to the longitudinal axis and substantially parallel to the first longitudinal side, and a first terminal bottom portion. The first terminal bottom portion comprises a first edge segment, a second edge segment, and a third edge segment. The first edge segment extends from the first longitudinal side at a first inner angle, the second edge segment extends from the second longitudinal side at a second inner angle, and the third edge segment connects the first edge segment with the second edge segment so that the third edge segment is substantially perpendicular to the longitudinal axis. As well, the first inner angle is congruent to the second inner angle.

In addition, the end panel comprises a first vertical side that is substantially parallel to the vertical axis, a second vertical side that is substantially parallel to the vertical axis and substantially parallel to the first vertical side, and a terminal end portion which comprises a first edge segment, a second edge segment, and a third edge segment. The first edge segment extends from the first vertical side at a first inner angle, the second edge segment extends from the second vertical side at a second inner angle, and the third edge segment connects the first edge segment with the second edge segment so that the third edge segment is substantially perpendicular to the vertical axis. Further, the first inner angle may be congruent to the second inner angle.

With respect to yet another aspect of the invention, the invention comprises a bag with an affixed strip.

### BRIEF DESCRIPTION OF THE DRAWING

Examples are described in detail below with reference to the attached drawing figures, wherein:
FIG. 1 depicts a bag as seen in standard use;
FIG. 2 depicts an oblique projection of the bag illustrating an end panel with a vertical axis, and a bottom panel with a longitudinal axis embodying features of the present invention;
FIG. 3 depicts a view of the bottom panel of the bag embodying features of the present invention;
FIG. 4 depicts a view of the end panel of the bag embodying features of the present invention;
FIG. 5 depicts a superior view of the bottom panel and the end panel before they are positioned abutting a strip in an embodiment of the present invention;
FIG. 6 depicts a superior view of the bottom panel and the end panel after they are positioned so they abut the strip in an embodiment of the present invention;
FIG. 7 depicts a cross-section of FIG. 6 illustrating how the bottom panel and the end panel abut the strip in an embodiment of the present invention;
FIG. 8 depicts an oblique projection of a welding assembly not according to the present invention;
FIG. 9 depicts a superior view of the welding assembly illustrating how the strip, the bottom panel and the end panel are aligned in the welding assembly;
FIG. 10 depicts a cross-section of the welding assembly illustrating how the strip is loaded into the welding assembly
FIG. 11 depicts a cross-section of the welding assembly illustrating the strip after it is loaded into the welding assembly;
FIG. 12 depicts the bag as seen in standard use with indications of where cross-sections 13 and 14 are located;
FIG. 13 depicts a cross-section of FIG. 12 illustrating a relationship between a first end portion of the strip, the bottom panel, and the end panel when the bag is in standard use in an embodiment of the present invention; and
FIG. 14 depicts a cross-section of FIG. 12 illustrating a relationship between a middle portion of the strip, the bottom panel, and the end panel when the bag is in standard use in an embodiment of the present invention.

### DETAILED DESCRIPTION OF THE INVENTION

The subject matter of the present invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" might be used herein to connote different elements of methods employed, the terms should not be interpreted as implying any particular order among or between various steps herein disclosed unless and except when the order of individual steps is explicitly stated.

The present invention relates to a three-dimensional structure constructed of pliable elements and, more particularly, a bag with welded seams. The three-dimensional structure composed of pliable elements may comprise duffle bags, bags, purses, slipcovers, backpacks, shoe uppers, gloves, hats, and the like. In one aspect, the pliable elements that make up the three-dimensional structure may be affixed together in a flattened, two-dimensional arrangement allowing for savings in manufacturing costs. As well, the pliable elements may be affixed together by a variety of attachment methodologies which will be discussed in more depth below. More specifically, with respect to a bag with welded seams, the pieces of material that make up the bag are joined together by a durable welded strip that provides superior resistance to water, oil, and other liquids or fine particulates. Additionally, the use of the welded strip to hold the pieces together allows the bag to be manufactured and stored in a flattened arrangement which allows for savings in both time and money.

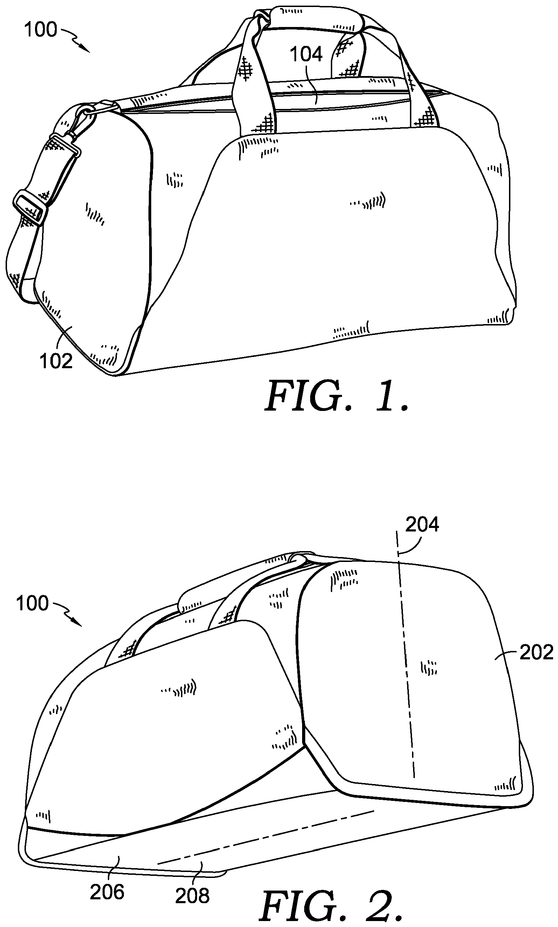

FIG. 1 illustrates a three-dimensional structure composed of pliable elements in the form of a bag 100 as seen in standard use with an exterior 102 aspect and an interior 104 aspect. FIG. 2 depicts an oblique projection of bag 100 illustrating an end panel 202 with a vertical axis 204, and a bottom panel 206 with a longitudinal axis 208. Although a bag is depicted in FIG. 1, the following discussion is applicable to any three-dimensional structure containing a cavity and composed of pliable elements.

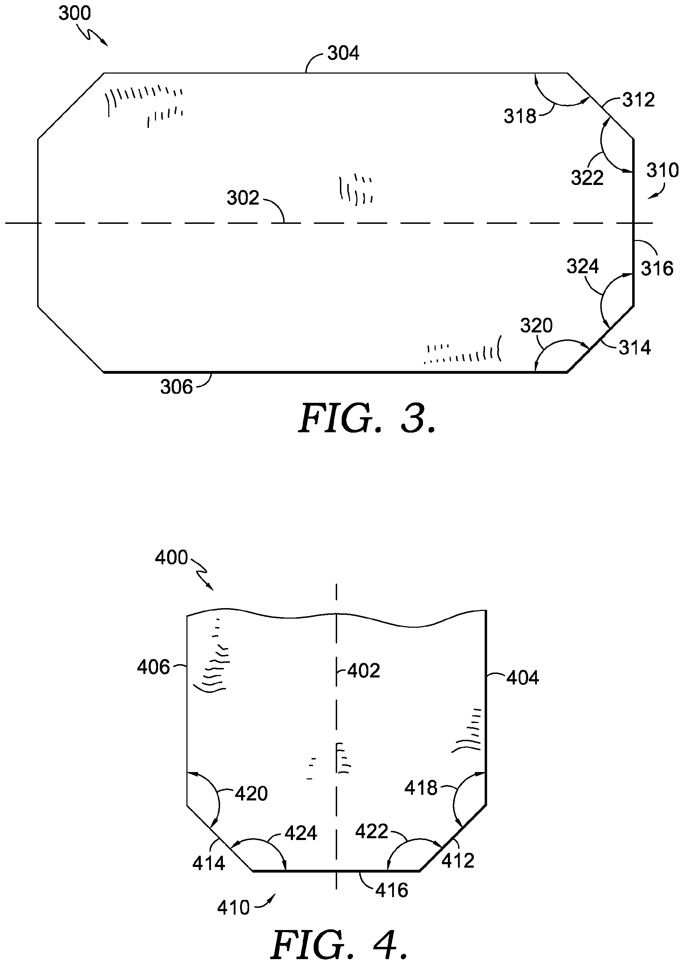

FIG. 3 is a view of a bottom panel 300 of bag 100 where bottom panel 300 corresponds to bottom panel 206 of FIG. 2. In one aspect, bottom panel 300 may have a longitudinal axis 302 (corresponding to longitudinal axis 208 of FIG. 2) as well as a first longitudinal side 304 extending generally along longitudinal axis 302. In one aspect, first longitudinal side 304 may be substantially parallel to longitudinal axis 302. In another aspect, first longitudinal side 304 may be slightly skewed not more than 45 degrees parallel to longitudinal axis 302. It should be noted that the term "bottom" is used for convenience in describing, but the panel may actually be a top panel, a side panel, etc.

A second longitudinal side 306 may also extend generally along longitudinal axis 302, and generally parallel to first longitudinal side 304. In one aspect, second longitudinal side 306 may extend substantially parallel to longitudinal axis 302. In another aspect, second longitudinal side 306 may be slightly skewed not more than 45 degrees parallel to longitudinal axis 302. As well, first longitudinal side 304 may be skewed to a different degree than second longitudinal side 306. With respect to such items as the bag shown in FIG. 1, first longitudinal side 304 and second longitudinal side 306 may be thought of as extending substantially parallel to longitudinal axis 302 and to each other. On the other hand, with respect to such items, for example, as shoes, backpacks, slipcovers, and hats, first longitudinal side 304 and second longitudinal side 306 may be thought of as extending generally along longitudinal axis 302.

The bottom panel 300 may have a first end known as a first terminal bottom portion 310. The first terminal bottom portion 310 may comprise at least a first edge segment 312, a second edge segment 314, and a third edge segment 316. First edge segment 312 may extend from first longitudinal side 304 at a first inner angle 318. As well, second edge segment 314 may extend from second longitudinal side 306 at a second inner angle 320. First inner angle 318 may or may not be congruent to second inner angle 320. For example, when first longitudinal side 304 and second longitudinal side 306 are slightly skewed from longitudinal axis 302, first inner angle 318 will likely not be congruent to second inner angle 320. In one aspect, first inner angle 318 and second inner angle 320 may range in measurement from 115 degrees to 140 degrees. In addition, in another aspect, first inner angle 318 and second inner angle 320 may measure 180 degrees.

Continuing on with FIG. 3, third edge segment 316 may connect to first edge segment 312 to form a first outer angle 322. In addition, third edge segment 316 may connect to second edge segment 314 to form a second outer angle 324, where second outer angle 324 may or may not be congruent to first outer angle 322. As well, third edge segment 316 may connect first edge segment 312 and second edge segment 314 such that third edge segment 316 is perpendicular to longitudinal axis 302. In another aspect, third edge segment 316 may simply connect first edge segment 312 and second edge segment 314 without being perpendicular to longitudinal axis 302. In one aspect, first outer angle 322 and second outer angle 324 may range in measurement from 115 degrees to 140 degrees. In another aspect, when first inner angle 318 measures 180 degrees, first outer angle may measure 90 degrees. Likewise, when second inner angle 320 measures 180 degrees, second outer angle 324 may measure 90 degrees.

In addition, bottom panel 300 may have a second terminal bottom portion (not shown). The second terminal bottom portion may have similar dimensions as first terminal bottom portion. This would be the case in such items as, for example, bag 100 of FIG. 1. Alternatively, second terminal bottom portion may have dimensions that differ from the dimensions of the first terminal bottom portion. This could be seen in items such as, for example, a shoe where the toe end of the shoe has different dimensions than the heel end of the shoe.

Turning now to FIG. 4, a first end panel 400 of bag 100 is depicted where first end panel 400 corresponds to end panel 202 of FIG. 2. First end panel 400 may have a vertical axis 402 corresponding to vertical axis 204 of FIG. 2. As well, first end panel 400 may have a first vertical side 404 extending generally along vertical axis 402 and a second vertical side 406 extending generally along vertical axis 402. In one aspect, first vertical side 404 and second vertical side 406 may extend substantially parallel to vertical axis 402 and substantially parallel to each other. In another aspect, first vertical side 404 and second vertical side 406 may be slightly skewed from vertical axis 402. In such a case, first vertical side 404 and second vertical side 406 may not be skewed more than 45 degrees parallel to vertical axis 402. As well, first vertical side 404 may be skewed to a different degree than second vertical side 406. The term "end" is used for convenience in describing. The end panel may actually be a bottom panel, a side panel, etc.

Continuing, first end panel 400 may also have an end portion known as a terminal end portion 410 that has at least a first edge segment 412, a second edge segment 414, and a third edge segment 416. First edge segment 412, second edge segment 414, and third edge segment 416 of terminal end portion 410 may, in one aspect, have substantially the same dimensions as first edge segment 312, second edge segment 314, and third edge segment 316 of first terminal bottom portion 310.

Still further with respect to FIG. 4, first edge segment 412 may extend from first vertical side 404 at a first inner angle 418. In addition, second edge segment 414 may extend from second vertical side 406 at a second inner angle 420. Second inner angle 420 may or may not be congruent to first inner angle 418. For instance, if first vertical side 404 and second vertical side 406 are substantially parallel to vertical axis 402, first inner angle 418 may be congruent to second inner angle 420. By contrast, if first vertical side 404 is skewed to a different degree from vertical axis 402 than second vertical side 406, then first inner angle 418 may not be congruent to second inner angle 420. Further, first inner angle 418 of terminal end portion 410 may be congruent to first inner angle 318 of first terminal bottom portion 310. In addition, second inner angle 420 of terminal end portion 410 may be congruent to second inner angle 320 of first terminal bottom portion 310. In yet another aspect, first inner angle 418 and second inner angle 420 may range in measurement from 115 degrees to 140 degrees. In addition, in still yet another aspect, first inner angle 418 and second inner angle 420 may measure 180 degrees.

Continuing with FIG. 4, third edge segment 416 may connect to first edge segment 412 to form a first outer angle 422. In addition, third edge segment 416 may connect to second edge segment 414 to form a second outer angle 424, where second outer angle 424 may or may not be congruent to first outer angle 422. In turn, first outer angle 422 of terminal end portion 410 may be congruent to first outer angle 322 of first terminal bottom portion 310. Likewise, second outer angle 424 of terminal end portion 410 may be congruent to second outer angle 324 of first terminal bottom portion 310. As well, third edge segment 416 may connect first edge segment 412 and second edge segment 414 such that third edge segment 416 is perpendicular to vertical axis 402. This would be seen, for example, in bag 100 of FIG. 1. In another aspect, third edge segment 416 may connect first edge segment 412 and second edge segment 414 so that third edge segment is not perpendicular to vertical axis 402. As mentioned above, this could be seen in a shoe. Continuing, first outer angle 422 and second outer angle 424 may range in measurement from 115 degrees to 140 degrees. In yet another aspect, when first inner angle 418 measures 180 degrees, first outer angle 422 may measure 90 degrees. Likewise, when second inner angle 420 measures 180 degrees, second outer angle 424 may measure 90 degrees.

In one aspect of the invention, a shape of first terminal bottom portion 310 and terminal end portion 410 may be defined by a shape of a strip that is used to affix first terminal bottom portion 310 to terminal end portion 410. In another aspect of the invention, the shape of the first terminal bottom portion 310 and the shape of the terminal end portion 410 may define the shape of the strip. In other words, when the shape of the first terminal bottom portion 310 is substantially congruent to the shape of the terminal end portion 410, the shape of the strip may be the substantially congruent to the first terminal bottom portion 310 and the terminal end portion 410.

In one aspect of the invention, bottom panel 300 or first end panel 400 may each be composed of one piece of pliable material; while in another aspect, bottom panel 300 or first end panel 400 may each be composed of multiple panels of pliable material. The multiple panels may be of the same material or the panels may be of different materials. In turn, bottom panel 300 may be comprised of one type of material, while first end panel 400 may be comprised of a different type of material. This could be seen, for example, in a shoe which could have a bottom panel 300 comprised of rubber and an end panel 400 composed of some type of cloth material. Pliable materials may be any type of durable material suitable for heavy wear such as cotton, nylon, leather, rubber, twill, canvas, blends, and the like.

Further, in one aspect of the invention, bottom panel 300 and first end panel 400 may be coated on one side with a sealant/adhesive compound such as, for example, polyurethane, latex, silicone, and the like. In yet another aspect, the coating is on the side of bottom panel 300 and first end panel 400 that is facing the exterior 102 of bag 100 when in standard use.

Bottom panel 300 and first end panel 400 may be affixed to each other by using a variety of attachment methodologies. For example, bottom panel 300 and first end panel 400 may be affixed to each other by stitching, glue, adhesives, thermoplastic polymers, lamination, hook-and-loop fasteners, snaps, buttons, adhesive tape, rivets, or any combination of the preceding elements. As well, bottom panel 300 and first end panel 400 may be affixed to each other by a strip or bumper. This aspect will be discussed in greater depth below. Bottom panel 300 and first end panel 400 may be affixed to each other in a flattened, two-dimensional arrangement regardless of what type of material is used to affix bottom panel 300 to first end panel 400.

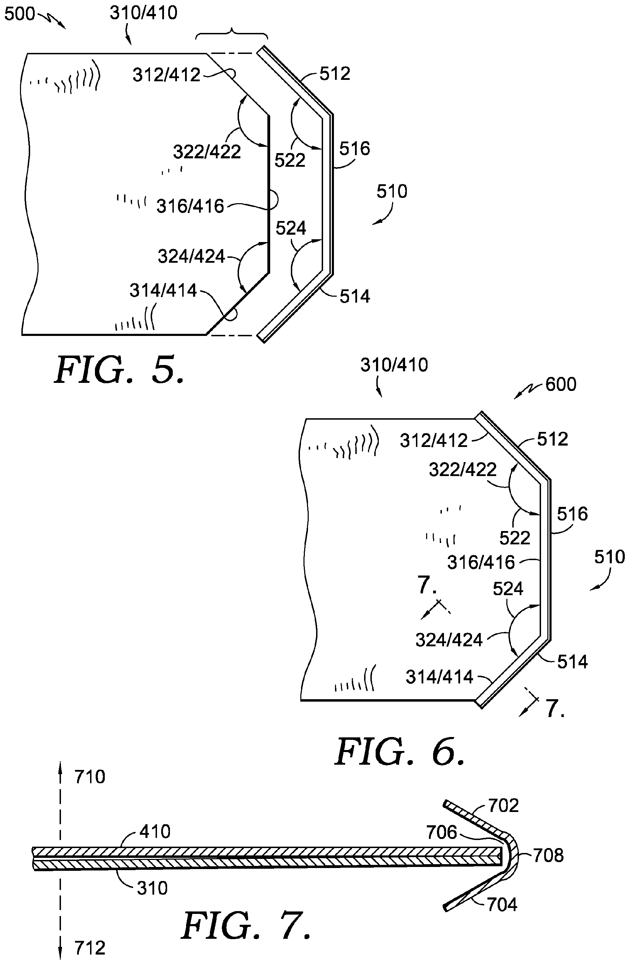

FIG. 5 depicts a superior view 500 of first terminal bottom portion 310 and terminal end portion 410 (superimposed on each other) before they are positioned abutting a strip 510 in an embodiment of the present invention. Strip 510 may comprise a first edge segment 512, a second edge segment 514, and a third edge segment 516. In one aspect, first edge segment 512, second edge segment 514, and third edge segment 516 of strip 510 may have substantially the same dimensions as first edge segment 312, second edge segment 314, and third edge segment 316 of first terminal bottom portion 310, as well as first edge segment 412, second edge segment 414, and third edge segment 416 of terminal end portion 410. Continuing on with respect to FIG. 5, in one aspect, first edge segment 512 of strip 510 is connected to third edge segment 516 to form a first angle 522. As well, second edge segment 514 of strip 510 may be connected to third edge segment 516 to form a second angle 524. First angle 522 may, in one aspect, be congruent to second angle 524. Further, first angle 522 and second angle 524 of strip 510 may be congruent to first outer angle 322 and second outer angle 324 of first terminal bottom portion 310, and first outer angle 422 and second outer angle 424 of terminal end portion 410.

In one aspect of the invention, the strip 510 may have a semi-rigid shape that provides a three-dimensional shape to the bag 100 when the bag 100 is in standard use. As well, the strip 510 may be thought of as having a first end portion connected to a second end portion by a middle portion. Thus, instead of having three edge segments (512, 514, and 516) and two angles (522 and 524), the strip 510 may assume a more curvilinear shape with a first end portion connected to a second end portion by a middle portion. In addition, in yet another aspect, the strip 510 may extend to the height of bag 100 when bag 100 is in standard use.

In another aspect of the invention, the entire strip 510 including the first angle 522 and the second angle 524 can be made by using injection molding techniques. Using injection molding techniques, the strip 510 may assume a semi-rigid shape when in a substantially three-dimensional arrangement. The strip 510, however, may still be hinged to flatten along its entire length when the strip 510 is in a substantially two-dimensional arrangement. Alternatively, using injection molding techniques, the strip 510 may assume a more flexible shape when in a substantially three-dimensional arrangement. Again, the strip 510 may be hinged to flatten along its entire length when the strip 510 is in a substantially two-dimensional arrangement. In another aspect of the invention, just the first edge segment 512 and the second edge segment 514 may be created by using injection molding techniques.

In one aspect, strip 510 may be a thermoplastic elastomer strip, where the thermoplastic elastomer may comprise thermoplastic polyurethane (TPU). TPU has many useful properties including elasticity, durability, resistance to abrasion, transparency, and resistance to oil, grease, water, and the like. These properties help to make TPU an ideal substance to weld together seams in bags, especially bags that see a lot of wear-and-tear such as duffel bags, backpacks, suitcases, diaper bags, briefcases, and the like. As well, TPU is colorable so that TPU strip 510 may be colored to match the color of bottom panel 300 and first end panel 400. Alternatively, TPU strip 510 may be colored differently than either bottom panel 300 or first end panel 400.

Further, in another aspect, TPU strip 510 may comprise one of a polyester-based TPU or a polyether-based TPU with a durometer reading between 80-90. Polyether-based TPU is useful where microbial resistance is required or in cases where flexibility at extremely low temperatures is desired, while polyester-based TPU demonstrates superior abrasion resistance, adhesion strength, chemical resistance, and resistance to heat ageing. In yet another aspect, strip 510 may comprise a rubber strip where the types of rubber may comprise butadiene rubber, ethylene propylene rubber, hydrogenated nitrile rubber, isoprene rubber, natural rubber, polychloroprene rubber, polyurethane rubber, styrene butadiene rubber, and such. Strip 510 may, in one aspect, have a receiving dimple that runs along the length of strip 510 in an interior aspect 104 and a corresponding bulb that runs along the length of strip 510 in an exterior aspect 102. This will be discussed in greater depth below with respect to FIG. 7.

Turning now to FIG. 6, a superior view is depicted of first terminal bottom portion 310 and terminal end portion 410 (superimposed on each other) after they are positioned so that they abut strip 510. As can be seen, first edge segments 312/412 of first terminal bottom portion 310 and terminal end portion 410 correspond to first edge segment 512 of strip 510. The same holds true for second edge segments 314/414 and third edge segments 316/416 of first terminal bottom portion 310 and terminal end portion 410, and second edge segment 514 and third edge segment 516 of strip 510. As well, first outer angles 322/422 and second outer angles 324/424 of first terminal bottom portion 310 and terminal end portion 410, correspond to first angle 522 and second angle 524 of strip 510.

With respect to FIG. 7, a cross-section of FIG. 6 is depicted showing how first terminal bottom portion 310 and terminal end portion 410 are positioned with respect to strip 510. It should be noted that although the term strip is used throughout the specification, the term bumper can be thought of as interchangeable with the term strip. In one aspect of the invention, strip 510 may have a receiving dimple 706 that runs along the length of strip 510 in an interior aspect 104 and a corresponding bulb 708 that runs along the length of strip 510 in an exterior aspect 102. Receiving dimple 706 is positioned on the side of strip 510 that will face the interior 104 of bag 100, while corresponding bulb 708 is positioned on the side of strip 510 that will face toward the exterior 102 of bag 100 when in standard use.

In addition, strip 510 has a first flange 702 that extends superiorly 710 when strip 510 is in a horizontal position. Strip 510 also has a second flange 704 that extends inferiorly 712 when strip 510 is in a horizontal position. In one aspect, first flange 702 is connected to second flange 704 by bulb portion 708. With respect to this aspect, first flange 702, bulb portion 708, and second flange 704 define a concave, interior aspect and a convex, exterior aspect when the bag is in standard use. First flange 702, bulb portion 708, and second 704 may assume a semi-rigid shape in one aspect, or may assume a more flexible shape in another aspect. As can be seen from FIG. 7, receiving dimple 706 of strip 510 may receive first edge segments 312/412, second edge segments 314/414, and third edge segments 316/416 of first terminal bottom portion 310 and terminal end portion 410. In one aspect, the material that makes up first edge segments 312/412, second edge segments 314/414, and third edge segments 316/416 extends substantially into the receiving dimple as shown in FIG. 7. In still another aspect, the material that extends into the receiving dimple may be a different type of material that is less thermoreactive than the material that makes up the rest of the bottom panel 300 and the first end panel 400.

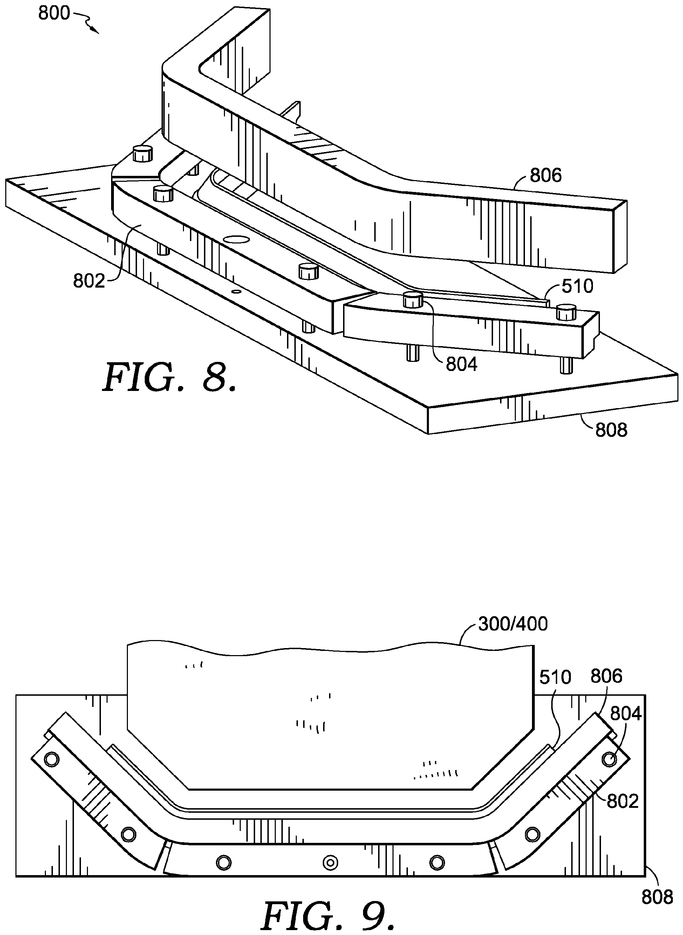

Turning now to FIGS. 8-11, a welding assembly 800 to make a welded bag is shown. FIG. 8 depicts an oblique view of welding assembly 800 showing a spring-loaded clamp 802, spring-loaded pins 804, a weld bar 806, and a base plate 808. In one aspect, spring-loaded clamp 802 may have anywhere from four to ten spring-loaded pins 804. FIG. 9 depicts a superior view of welding assembly 800. As can be seen from FIG. 9, weld bar 806 may be positioned so that it is adjacent to spring-loaded clamp 802 when weld bar 806 is engaged. This arrangement allows weld bar 806 to make contact with strip 510. FIG. 9 also depicts how bottom panel 300 and first end panel 400 are horizontally positioned with respect to welding assembly 800.

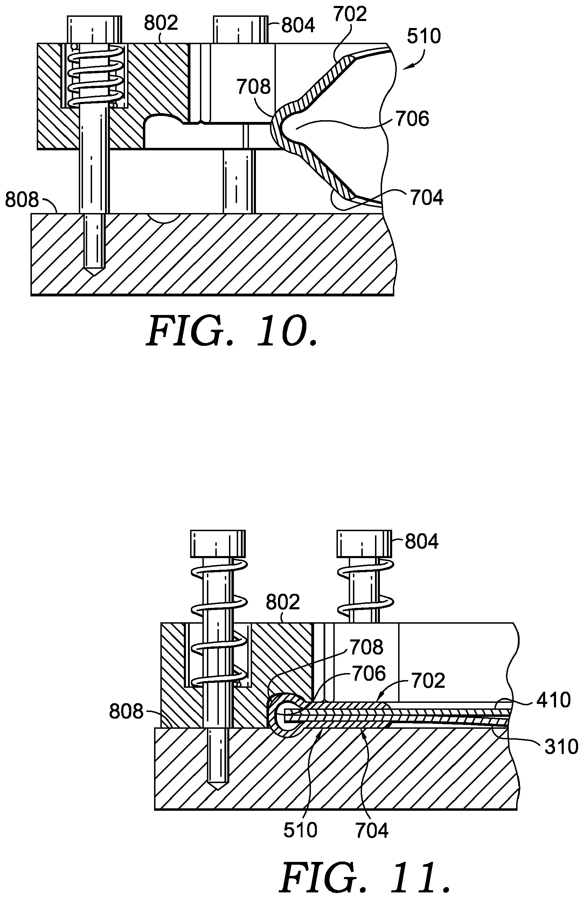

In one aspect, spring-loaded clamp 802 may horizontally receive strip 510 as shown in FIG. 8. More specifically, spring-loaded clamp 802 may receive corresponding bulb 708 of strip 510 as shown in FIGS. 10-11. FIG. 10 depicts strip 510 with first flange 702, second flange 704, receiving dimple 706, and corresponding bulb 708. Corresponding bulb 708 may be horizontally positioned on base plate 808 so that it may be aligned adjacent to spring-loaded pins 804. Spring-loaded pins 804 may then be engaged to secure strip 510 in place as shown in FIG. 11.

In another aspect, once corresponding bulb 708 is positioned adjacent to spring-loaded pins 804, first terminal bottom portion 310 and terminal end portion 410 may be positioned so they abut receiving dimple 706 as set forth above. Spring-loaded pins 804 may then be engaged, as shown in FIG. 11, to secure strip 510, first terminal bottom portion 310, and terminal end portion 410. As can be seen from FIG. 11, strip 510, first terminal bottom portion 310, and terminal end portion 410 are assembled in a substantially two-dimensional arrangement. Even more specifically, first flange 702 and second flange 704 are in a substantially parallel planar relationship when the bag is in a substantially two-dimensional arrangement. The term two-dimensional with respect to this invention means a substantially flattened arrangement as compared to the bag when in standard use.

As can be seen from this arrangement, the shape of first terminal bottom portion 310, terminal end portion 410, and strip 510 are substantially congruent to each other. However, the shape of the remaining portions of bottom panel 300 and first end panel 400 may vary from each other. Thus, the bottom panel 300 and the first end panel 400 may be different shapes as long as the first terminal bottom portion 310 and the terminal end portion 410 are substantially congruent to each other and to strip 510.

After strip 510, first terminal bottom portion 310, and terminal end portion 410 are in place, weld bar 806 may be positioned to make contact with a portion of the welded bag. Once positioned, weld bar 806 may weld strip 510 to first terminal bottom portion 310 and terminal end portion 410. Even more specifically in one aspect, weld bar 806 may weld first flange 702 and second flange 704 to first terminal bottom portion 310 and terminal end portion 410.

In one example of the invention, where strip 510 is made of rubber, weld bar 806 may comprise a heat press that affixes strip 510 onto first terminal bottom portion 310 and terminal end portion 410 to form a welded seam. Alternatively, where strip 510 is made of TPU, weld bar 806 may comprise a high radio-frequency press. In yet another aspect, where strip 510 is made of TPU, a polyurethane coating may be applied to one side of bottom panel 300 and first end panel 400 so that the polyurethane coating is facing exterior 102 of bag 100 when in standard use. The polyurethane coating may, in one aspect, help TPU strip 510 bond to first terminal bottom portion 310 and terminal end portion 410. Further, welding assembly 800 may have adjustable welding settings comprising pressure exerted by weld bar 806, time of contact by weld bar 806, energy rating, and cure time.

In one aspect, the welding assembly 800 may be configured to weld one segment at a time. For example, the welding assembly 800 may weld first edge segments 312/412 to first edge segment 512 of the strip 510. The same holds true for second edge segments 314/414 and third edge segments 316/416. Alternatively, the welding assembly 800 may be configured to just weld the first terminal bottom portion 310 to the strip 510, or to just weld the terminal end portion 410 to the strip 510. Any and all such variations are within the scope of the invention.

In another aspect of the invention, spring-loaded clamp 802 may receive just first terminal bottom portion 310 and terminal end portion 410 without the strip 510. With respect to this aspect, hot melt glue may be applied to one side of first terminal bottom portion 310 and one side of terminal end portion 410. First terminal bottom portion 310 and terminal end portion 410 may then be aligned so that the sides with the applied hot melt glue are facing each other. First terminal bottom portion 310 and terminal end portion 410 are then loaded into spring-loaded clamp 802 and weld bar 806 is applied. Weld bar 806, in this aspect, may comprise a heat press. It is to be understood that the order of steps outlined above are not meant to limit the scope of the present invention in any way and, in fact, the steps may occur in a variety of different sequence within aspects hereof. Any and all such variations and any combination thereof are contemplated to be within the scope of aspects of the present invention.

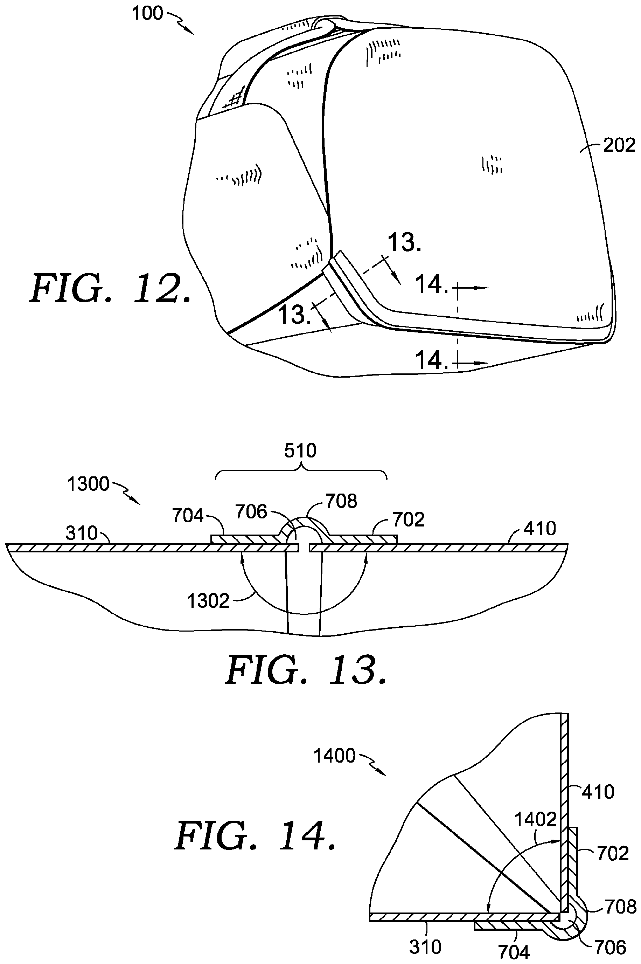

FIG. 12 illustrates bag 100 as seen in standard use, and is used to indicate where cross-sections 13 and 14 are located. As can be seen, cross-section 13 is taken along the first end portion of strip 510, and cross-section 14 is taken along the middle portion of strip 510. In one aspect of the invention, cross-section 13 may look substantially the same as a cross-section taken along a second end portion of strip 510.

FIGS. 13-14 depict the cross-sections 13 and 14 taken from FIG. 12. As can be seen from both FIG. 13 and FIG. 14, an interior surface of first flange 702 may be affixed to an exterior surface of terminal end portion 410. The exterior surface of terminal end portion 410 corresponds to the exterior aspect of bag 100 when in standard use. As well, an interior surface of second flange 704 may be affixed to an exterior surface of first terminal bottom portion 310. The exterior surface of first terminal bottom portion 310 corresponds to the exterior aspect of bag 100 when in standard use. As mentioned above, a shape of first terminal bottom portion 310 and a shape of terminal end portion 410 may be defined by the shape of strip 510. In one aspect, the shape of first terminal bottom portion 310 and terminal end portion 410 may be substantially congruent. FIGS. 13 and 14 also illustrate how the material of first terminal bottom portion 310 and terminal end portion 410 extends into the receiving dimple 706.

Referring now specifically to FIG. 13, referenced generally by the numeral 1300, a cross-section taken through the first end portion of strip 510 is depicted. Cross-section 1300 illustrates how the strip 510 overlaps the first terminal bottom portion 310 as well as the terminal end portion 410. Cross-section 1300 also illustrates an angle 1302 between first flange 702 and second flange 704. In one aspect, angle 1302 may be between 160 degrees and 180 degrees. Cross-section 1300 may, in one aspect, be substantially the same as a cross-section taken through a second end portion of strip 510.

With respect to FIG. 14, referenced generally by the numeral 1400, a cross-section taken through a middle portion of strip 510 is depicted. Cross-section 1400 illustrates an angle 1402 between first flange 702 and second flange 704. In one aspect of the invention, angle 1302 may be of greater magnitude than angle 1402. In yet another aspect, angle 1402 may be between 75 degrees and 110 degrees. Still further, in one aspect, angle 1302 may be 180 degrees and angle 1402 may be 90 degrees. Because strip 510 may be semi-rigid, the arrangement of angles 1302 and 1402 hold bottom panel 300 and first end panel 400 in a substantially three-dimensional configuration when bag 100 is in standard use.

The present invention has been described in relation to particular examples, which are intended in all respects to be illustrative rather than restrictive. Alternative embodiments will become apparent to those of ordinary skill in the art to which the present invention pertains without departing from its scope. Certain features and subcombinations are of utility and may be employed without reference to other features and subcombinations and are contemplated within the scope of the claims.

## Claims

1. A three-dimensional structure (100) composed of pliable elements, comprising:
a bottom panel (206, 300) with a longitudinal axis (208, 302) that serves as the bottom of the structure (100) when in standard use, the bottom panel (206, 300) comprising: (A) a first longitudinal side (304) extending generally along the longitudinal axis (208, 302), wherein the first longitudinal side (304) is not skewed more than 45 degrees parallel to the longitudinal axis (208, 302), (B) a second longitudinal side (306) extending generally along the longitudinal axis (208, 302), wherein the second longitudinal side (306) is not skewed more than 45 degrees parallel to the longitudinal axis (208, 302), (C) a first terminal bottom portion (310) comprising at least a first edge segment (312), a second edge segment (314), and a third edge segment (316), wherein: a) the first edge segment (312) extends from the first longitudinal side (304) at a first inner angle (318), b) the second edge segment (314) extends from the second longitudinal side (306) at a second inner angle (320), and c) the third edge segment (316) connects the first edge segment (312) and the second edge segment (314);
a first end panel (202, 400) with a vertical axis (204, 402) that serves as the end of the structure (100) when in standard use, the first end panel (202, 400) comprising: (A) a first vertical side (404) extending generally along the vertical axis (204, 402), wherein the first vertical side (404) is not skewed more than 45 degrees parallel to the vertical axis (204, 402), (B) a second vertical side (406) extending generally along the vertical axis (204, 402), wherein the second vertical side (406) is not skewed more than 45 degrees parallel to the vertical axis (204, 402), and (C) a terminal end portion (410) comprising at least a first edge segment (412), a second edge segment (414), and a third edge segment (416), wherein the first edge segment (412), the second edge segment (414), and the third edge segment (416) of the terminal end portion (410) have substantially the same dimensions as the first edge segment (312), the second edge segment (314), and the third edge segment (316) of the first terminal bottom portion (310), and further wherein: a) the first edge segment (412) extends from the first vertical side (404) at a first inner angle (418), b) the second edge segment (414) extends from the second vertical side (406) at a second inner angle (420), wherein the first inner angle (418) and the second inner angle (420) of the terminal end portion (410) are congruent to the first inner angle (318) and the second inner angle (320) of the first terminal bottom portion (310), and c) the third edge segment (416) connects the first edge segment (412) and the second edge segment (414); and
at least one affixing element (510) joining the first edge segment (312) of the first terminal bottom portion (310) with the first edge segment (412) of the terminal end portion (410), the second edge segment (314) of the first terminal bottom portion (310) with the second edge segment (414) of the terminal end portion (410), and the third edge segment (316) of the first terminal bottom portion (310) with the third edge segment (416) of the terminal end portion (410).

2. The structure (100) of claim 1, wherein the bottom panel (206, 300) comprises at least one of a polyester fabric, a nylon-woven fabric, or rubber, and further wherein the end panel (202, 400) comprises at least one of a polyester fabric, a nylon-woven fabric, or leather, or wherein the at least one affixing element (510) comprises at least one of stitching, a thermoplastic polymer, or an adhesive.

3. A method to make a bag (100), comprising:
cutting a bottom panel (206, 300) having a longitudinal axis (208, 302) that serves as the bottom of the bag (100) when in standard use, the bottom panel (206, 300) comprising: (A) a first longitudinal side (304) extending substantially parallel to the longitudinal axis (208, 302), (B) a second longitudinal side (306) extending substantially parallel to the longitudinal axis (208, 302) and substantially parallel to the first longitudinal side (304), and (C) a first terminal bottom portion (310) comprising at least a first edge segment (312), a second edge segment (314), and a third edge segment (316), wherein: a) the first edge segment (312) extends from the first longitudinal side (304) at a first inner angle (318), b) the second edge segment (314) extends from the second longitudinal side (306) at a second inner angle (320), wherein the second inner angle (320) is congruent to the first inner angle (318), and c) the third edge segment (316) connects the first edge segment (312) and the second edge segment (314) such that the third edge segment (316) is perpendicular to the longitudinal axis (208, 302);
cutting an end panel (202, 400) having a vertical axis (204, 402) that serves as an end of the bag (100) when in standard use, the end panel (202, 400) comprising: (A) a first vertical side (404) extending substantially parallel to the vertical axis (204, 402), (B) a second vertical side (406) extending substantially parallel to the vertical axis (204, 402) and substantially parallel to the first vertical side (404), and (C) a terminal end portion (410) comprising at least a first edge segment (412), a second edge segment (414), and a third edge segment (416), wherein the first edge segment (412), the second edge segment (414), and the third edge segment (416) of the terminal end portion (410) have substantially the same dimensions as the first edge segment (312), the second edge segment (314), and the third edge segment (316) of the first terminal bottom portion (310), and further wherein: a) the first edge segment (412) extends from the first vertical side (404) at a first inner angle (418), b) the second edge segment (414) extends from the second vertical side (406) at a second inner angle (420), wherein the second inner angle (420) is congruent to the first inner angle (418), and further wherein the first inner angle (418) and the second inner angle (420) of the terminal end portion (410) are substantially congruent to the first inner angle (318) and the second inner angle (320) of the first terminal bottom portion (310), and c) the third edge segment (316) connects the first edge segment (412) and the second edge segment (414) such that the third edge segment (416) is perpendicular to the vertical axis (204, 402);
cutting a thermoplastic elastomer strip (510); and thermally welding the terminal end portion (410) of the end panel (202, 400) to the first terminal bottom portion (310) of the bottom panel (206, 300) by heating the thermoplastic elastomer strip (510).

4. The method of claim 3, wherein the thermoplastic elastomer strip (510) comprises thermoplastic polyurethane.

5. The method of claim 4, wherein the thermoplastic polyurethane comprises one of polyester-based thermoplastic polyurethane or polyether-based thermoplastic polyurethane.

6. The method of claim 3, further comprising the thermoplastic elastomer strip (510) having a receiving dimple (706) that runs along the length of the thermoplastic elastomer strip (510) in an interior (104) aspect and a corresponding bulb (708) that runs along the length of the thermoplastic elastomer strip (510) in an exterior (102) aspect, and preferably wherein the first terminal bottom portion (310) and the terminal end portion (410) abut the receiving dimple (706) along the length of the thermoplastic elastomer strip (510) in the interior (104) aspect.

7. The method of claim 3, wherein the thermoplastic elastomer strip (510) is colorable.

8. The method of claim 3, wherein the bottom panel (206, 300) and the end panel (202, 400) are coated on one side with a polyurethane coating, and preferably wherein the polyurethane coating is on the exterior (102) of the bag (100).

9. The three-dimensional structure of claim 1, wherein:
the structure is a bag (100) with welded seams;
the first longitudinal side (304) extends substantially parallel to the longitudinal axis (208, 302);
the second longitudinal side (306) extends substantially parallel to the longitudinal axis (208, 302) and substantially parallel to the first longitudinal side (304);
the second inner angle (320) of the first terminal bottom portion (310) is congruent to the first inner angle (318) of the first terminal bottom portion (310);
the third edge segment (316) of the first terminal bottom portion (310) is perpendicular to the longitudinal axis (208, 302);
the first vertical side (404) extends substantially parallel to the vertical axis (204, 402);
the second vertical side (406) extends substantially parallel to the vertical axis (204, 402) and substantially parallel to the first vertical side (404);
the second inner angle (420) of the terminal end portion (410) is congruent to the first inner angle (418) of the terminal end portion (410);
the third edge segment (416) of the first terminal bottom portion (310) is perpendicular to the vertical axis (204, 402); and
the affixing element (510) is a thermoplastic elastomer strip (510) that thermally welds the first edge segment (312) of the first terminal bottom portion (310) to the first edge segment (412) of the terminal end portion (410), the second edge segment (314) of the first terminal bottom portion (310) to the second edge segment (414) of the terminal end portion (410), and the third edge segment (316) of the first terminal bottom portion (310) to the third edge segment (416) of the terminal end portion (410).

## Patentansprüche

1. Dreidimensionale Struktur (100), die aus biegsamen Elementen zusammengesetzt ist, umfassend:
ein unteres Paneel (206, 300) mit einer Längsachse (208, 302), das bei standardmäßiger Verwendung als das Unterteil der Struktur (100) dient, wobei das untere Paneel (206, 300) Folgendes umfasst: (A) eine erste Längsseite (304), die sich generell entlang der Längsachse (208, 302) erstreckt, worin die erste Längsseite (304) nicht mehr als 45 Grad parallel zur Längsachse (208, 302) schräg ist, (B) eine zweite Längsseite (306), die sich generell entlang der Längsachse (208, 302) erstreckt, worin die zweite Längsseite (306) nicht mehr als 45 Grad parallel zur Längsachse (208, 302) schräg ist, (C) einen ersten terminalen unteren Abschnitt (310) umfassend mindestens ein erstes Randsegment (312), ein zweites Randsegment (314) und ein drittes Randsegment (316), worin: a) sich das erste Randsegment (312) von der ersten Längsseite (304) unter einem ersten inneren Winkel (318) erstreckt, b) sich das zweite Randsegment (314) von der zweiten Längsseite (306) unter einem zweiten inneren Winkel (320) erstreckt, und c) das dritte Randsegment (316) das erste Randsegment (312) und das zweite Randsegment (314) verbindet;
ein erstes Endpaneel (202, 400) mit einer vertikalen Achse (204, 402), das bei standardmäßiger Verwendung als das Ende der Struktur (100) dient, wobei das erste Endpaneel (202, 400) Folgendes umfasst: (A) eine erste vertikale Seite (404), die sich generell entlang der vertikalen Achse (204, 402) erstreckt, worin die erste vertikale Seite (404) nicht mehr als 45 Grad parallel zur vertikalen Achse (204, 402) schräg ist, (B) eine zweite vertikale Seite (406), die sich generell entlang der vertikalen Achse (204, 402) erstreckt, worin die zweite vertikale Seite (406) nicht mehr als 45 Grad parallel zur vertikalen Achse (204, 402) schräg ist, und (C) einen terminalen Endabschnitt (410) umfassend mindestens ein erstes Randsegment (412), ein zweites Randsegment (414) und ein drittes Randsegment (416), worin das erste Randsegment (412), das zweite Randsegment (414) und das dritte Randsegment (416) des terminalen Endabschnitts (410) im Wesentlichen die gleichen Abmessungen wie das erste Randsegment (312), das zweite Randsegment (314) und das dritte Randsegment (316) des ersten terminalen unteren Abschnitts (310) aufweisen, und ferner worin: a) sich das erste Randsegment (412) von der ersten vertikalen Seite (404) unter einem ersten inneren Winkel (418) erstreckt, b) sich das zweite Randsegment (414) von der zweiten vertikalen Seite (406) unter einem zweiten inneren Winkel (420) erstreckt, worin der erste innere Winkel (418) und der zweite innere Winkel (420) des terminalen Endabschnitts (410) kongruent zu dem ersten inneren Winkel (318) und dem zweiten inneren Winkel (320) des ersten terminalen unteren Abschnitts (310) sind, und c) das dritte Randsegment (416) das erste Randsegment (412) und das zweite Randsegment (414) verbindet; und
mindestens ein Befestigungselement (510), das das erste Randsegment (312) des ersten terminalen unteren Abschnitts (310) mit dem ersten Randsegment (412) des terminalen Endabschnitts (410), das zweite Randsegment (314) des ersten terminalen unteren Abschnitts (310) mit dem zweiten Randsegment (414) des terminalen Endabschnitts (410) und das dritte Randsegment (316) des ersten terminalen unteren Abschnitts (310) mit dem dritten Randsegment (416) des terminalen Endabschnitts (410) verbindet.

2. Struktur (100) nach Anspruch 1, worin das untere Paneel (206, 300) mindestens eines von einem Polyesterstoff, einem Nylon-Webstoff oder Gummi umfasst und ferner, worin das Endpaneel (202, 400) mindestens eines von einem Polyesterstoff, einem Nylon-Webstoff oder Leder umfasst oder worin das mindestens eine Befestigungselement (510) mindestens eines von Nähten, einem thermoplastischen Polymer oder einem Klebstoff umfasst.

3. Verfahren zum Herstellen eines Beutels (100), umfassend:
Schneiden eines unteren Paneels (206, 300) aufweisend eine Längsachse (208, 302), das bei standardmäßiger Verwendung als das Unterteil des Beutels (100) dient, wobei das untere Paneel (206, 300) Folgendes umfasst: (A) eine erste Längsseite (304), die sich im Wesentlichen parallel zur Längsachse (208, 302) erstreckt, (B) eine zweite Längsseite (306), die sich im Wesentlichen parallel zur Längsachse (208, 302) und im Wesentlichen parallel zur ersten Längsseite (304) erstreckt, und (C) einen ersten terminalen unteren Abschnitt (310) umfassend mindestens ein erstes Randsegment (312), ein zweites Randsegment (314) und ein drittes Randsegment (316), worin: a) sich das erste Randsegment (312) von der ersten Längsseite (304) unter einem ersten inneren Winkel (318) erstreckt, b) sich das zweite Randsegment (314) von der zweite Längsseite (306) unter einem zweiten inneren Winkel (320) erstreckt, worin der zweite innere Winkel (320) kongruent zum ersten inneren Winkel (318) ist, und c) das dritte Randsegment (316) das erste Randsegment (312) und das zweite Randsegment (314) so verbindet, dass das dritte Randsegment (316) senkrecht zur Längsachse (208, 302) ist;
Schneiden eines Endpaneels (202, 400) aufweisend eine vertikale Achse (204, 402), das bei standardmäßiger Verwendung als ein Ende des Beutels (100) dient, wobei das Endpaneel (202, 400) Folgendes umfasst: (A) eine erste vertikale Seite (404), die sich im Wesentlichen parallel zur vertikalen Achse (204, 402) erstreckt, (B) eine zweite vertikale Seite (406), die sich im Wesentlichen parallel zur vertikalen Achse (204, 402) und im Wesentlichen parallel zur ersten vertikalen Seite (404) erstreckt, und (C) einen terminalen Endabschnitt (410) umfassend mindestens ein erstes Randsegment (412), ein zweites Randsegment (414) und ein drittes Randsegment (416), worin das erste Randsegment (412), das zweite Randsegment (414) und das dritte Randsegment (416) des terminalen Endabschnitts (410) im Wesentlichen die gleichen Abmessungen wie das erste Randsegment (312), das zweite Randsegment (314) und das dritte Randsegment (316) des ersten terminalen unteren Abschnitts (310) aufweisen, und ferner worin: a) sich das erste Randsegment (412) von der ersten vertikalen Seite (404) unter einem ersten inneren Winkel (418) erstreckt, b) sich das zweite Randsegment (414) von der zweiten vertikalen Seite (406) unter einem zweiten inneren Winkel (420) erstreckt, worin der zweite innere Winkel (420) kongruent zum ersten inneren Winkel (418) ist, und ferner worin der erste innere Winkel (418) und der zweite innere Winkel (420) des terminalen Endabschnitts (410) im Wesentlichen kongruent zu dem ersten inneren Winkel (318) und dem zweiten inneren Winkel (320) des ersten terminalen unteren Abschnitts (310) sind, und c) das dritte Randsegment (316) das erste Randsegment (412) und das zweite Randsegment (414) so verbindet, dass das dritte Randsegment (416) senkrecht zur vertikalen Achse (204, 402) ist;
Schneiden eines thermoplastischen Elastomerstreifens (510); und thermisches Verschweißen des terminalen Endabschnitts (410) des Endpaneels (202, 400) mit dem ersten terminalen unteren Abschnitt (310) des unteren Paneels (206, 300) durch Erhitzen des thermoplastischen Elastomerstreifens (510).

4. Verfahren nach Anspruch 3, worin der thermoplastische Elastomerstreifen (510) thermoplastisches Polyurethan umfasst.

5. Verfahren nach Anspruch 4, worin das thermoplastische Polyurethan eines von polyesterbasiertem thermoplastischen Polyurethan oder polyetherbasiertem thermoplastischem Polyurethan umfasst.

6. Verfahren nach Anspruch 3, ferner umfassend den thermoplastischen Elastomerstreifen (510) mit einem Aufnahmegrübchen (706), das entlang der Länge des thermoplastischen Elastomerstreifens (510) in einem inneren (104) Aspekt verläuft, und eine entsprechende Wulst (708), die entlang der Länge des thermoplastischen Elastomerstreifens (510) in einem äußeren (102) Aspekt verläuft, und vorzugsweise, worin der erste terminale untere Abschnitt (310) und der terminale Endabschnitt (410) an das Aufnahmegrübchen (706) entlang der Länge des thermoplastischen Elastomerstreifens (510) im inneren (104) Aspekt anstoßen.

7. Verfahren nach Anspruch 3, worin der thermoplastische Elastomerstreifen (510) färbbar ist.

8. Verfahren nach Anspruch 3, worin das untere Paneel (206, 300) und das Endpaneel (202, 400) auf einer Seite mit einer Polyurethanbeschichtung beschichtet sind, und vorzugsweise, worin die Polyurethanbeschichtung außen (102) auf dem Beutel (100) ist.

9. Dreidimensionale Struktur nach Anspruch 1, worin:
die Struktur ein Beutel (100) mit geschweißten Nähten ist;
sich die erste Längsseite (304) im Wesentlichen parallel zur Längsachse (208, 302) erstreckt;
sich die zweite Längsseite (306) im Wesentlichen parallel zur Längsachse (208, 302) und im Wesentlichen parallel zur ersten Längsseite (304) erstreckt;
der zweite innere Winkel (320) des ersten terminalen unteren Abschnitts (310) kongruent zum ersten inneren Winkel (318) des ersten terminalen unteren Abschnitts (310) ist;
das dritte Randsegment (316) des ersten terminalen unteren Abschnitts (310) senkrecht zur Längsachse (208, 302) ist;
sich die erste vertikale Seite (404) im Wesentlichen parallel zur vertikalen Achse (204, 402) erstreckt;
sich die zweite vertikale Seite (406) im Wesentlichen parallel zur vertikalen Achse (204, 402) und im Wesentlichen parallel zur ersten vertikalen Seite (404) erstreckt;
der zweite innere Winkel (420) des terminalen Endabschnitts (410) kongruent zum ersten inneren Winkel (418) des terminalen Endabschnitts (410) ist;
das dritte Randsegment (416) des ersten terminalen unteren Abschnitts (310) senkrecht zur vertikalen Achse (204, 402) ist; und
das Befestigungselement (510) ein thermoplastischer Elastomerstreifen (510) ist, der das erste Randsegment (312) des ersten terminalen unteren Abschnitts (310) mit dem ersten Randsegment (412) des terminalen Endabschnitts (410), das zweite Randsegment (314) des ersten terminalen unteren Abschnitts (310) mit dem zweiten Randsegment (414) des terminalen Endabschnitts (410) und das dritte Randsegment (316) des ersten terminalen unteren Abschnitts (310) mit dem dritten Randsegment (416) des terminalen Endabschnitts (410) thermisch verschweißt.

## Revendications

1. Structure tridimensionnelle (100) composée d'éléments pliables, comprenant :
un panneau inférieur (206, 300) avec un axe longitudinal (208, 302) qui sert de fond de la structure (100) lors d'une utilisation standard, le panneau inférieur (206, 300) comprenant : (A) un premier côté longitudinal (304) s'étendant généralement le long de l'axe longitudinal (208, 302), le premier côté longitudinal (304) n'étant pas incliné de plus de 45 degrés parallèlement à l'axe longitudinal (208, 302), (B) un second côté longitudinal (306) s'étendant généralement le long de l'axe longitudinal (208, 302), le second côté longitudinal (306) n'étant pas incliné de plus de 45 degrés parallèlement à l'axe longitudinal (208, 302), et (C) une première partie inférieure terminale (310) comprenant au moins un premier segment périphérique (312), un deuxième segment périphérique (314) et un troisième segment périphérique (316), a) le premier segment périphérique (312) s'étendant à partir du premier côté longitudinal (304) à un premier angle intérieur (318), b) le deuxième segment périphérique (314) s'étendant à partir du second côté longitudinal (306) à un second angle intérieur (320), et c) le troisième segment périphérique (316) connectant le premier segment périphérique (312) et le deuxième segment périphérique (314) ;
un premier panneau extrême (202, 400) avec un axe vertical (204, 402) qui sert d'extrémité de la structure (100) lors d'une utilisation standard, le premier panneau extrême (202, 400) comprenant : (A) un premier côté vertical (404) s'étendant généralement le long de l'axe vertical (204, 402), le premier côté vertical (404) n'étant pas incliné de plus de 45 degrés parallèlement à l'axe vertical (204, 402), (B) un second côté vertical (406) s'étendant généralement le long de l'axe vertical (204, 402), le second côté vertical (406) n'étant pas incliné de plus de 45 degrés parallèlement à l'axe vertical (204, 402), et (C) une partie extrême terminale (410) comprenant au moins un premier segment périphérique (412), un deuxième segment périphérique (414) et un troisième segment périphérique (416), le premier segment périphérique (412), le deuxième segment périphérique (414) et le troisième segment périphérique (416) de la partie extrême terminale (410) ayant sensiblement les mêmes dimensions que le premier segment périphérique (312), le deuxième segment périphérique (314) et le troisième segment périphérique (316) de la première partie inférieure terminale (310), et en outre a) le premier segment périphérique (412) s'étendant à partir du premier panneau vertical (404) à un premier angle intérieur (418), b) le deuxième segment périphérique (414) s'étendant à partir du second côté vertical (406) à un second angle intérieur (420), le premier angle intérieur (418) et le second angle intérieur (420) de la partie extrême terminale (410) concordant avec le premier angle intérieur (318) et le second angle intérieur (320) de la première partie inférieure terminale (310), et c) le troisième segment périphérique (416) connectant le premier segment périphérique (412) et le deuxième segment périphérique (414) ; et
au moins un élément de fixation (510) joignant le premier segment périphérique (312) de la première partie inférieure terminale (310) au premier segment périphérique (412) de la partie extrême terminale (410), le deuxième segment périphérique (314) de la première partie inférieure terminale (310) au deuxième périphérique (414) de la partie extrême terminale (410), et le troisième segment périphérique (316) de la première partie inférieure terminale (310) au troisième segment périphérique (416) de la partie extrême terminale (410).

2. Structure (100) selon la revendication 1, dans laquelle le panneau inférieur (206, 300) comprend une toile polyester, un tissu de nylon et/ou du caoutchouc, et dans laquelle en outre le panneau extrême (202, 400) comprend une toile polyester, un tissu de nylon et/ou du cuir, ou dans laquelle l'au moins un élément de fixation (510) comprend une couture, un polymère thermoplastique et/ou un adhésif.

3. Procédé de fabrication d'un sac (100), consistant à :
découper un panneau inférieur (206, 300) ayant un axe longitudinal (208, 302) qui sert de fond du sac (100) lors d'une utilisation standard, le panneau inférieur (206, 300) comprenant : (A) un premier côté longitudinal (304) s'étendant sensiblement parallèlement à l'axe longitudinal (208, 302), (B) un second côté longitudinal (306) s'étendant sensiblement parallèlement à l'axe longitudinal (208, 302) et sensiblement parallèlement au premier côté longitudinal (304), et (C) une première partie inférieure terminale (310) comprenant au moins un premier segment périphérique (312), un deuxième segment périphérique (314) et un troisième segment périphérique (316), a) le premier segment périphérique (312) s'étendant à partir du premier côté longitudinal (304) à un premier angle intérieur (318), b) le deuxième segment périphérique (314) s'étendant à partir du second côté longitudinal (306) à un second angle intérieur (320), le second angle intérieur (320) concordant avec le premier angle intérieur (318), et c) le troisième segment périphérique (316) connectant le premier segment périphérique (312) et le deuxième segment périphérique (314) de sorte que le troisième segment périphérique (316) soit perpendiculaire à l'axe longitudinal (208, 302) ;
découper un panneau extrême (202, 400) ayant un axe vertical (204, 402) qui sert d'extrémité du sac (100) lors d'une utilisation standard, le panneau extrême (202, 400) comprenant : (A) un premier côté vertical (404) s'étendant sensiblement parallèlement à l'axe vertical (204, 402), (B) un second côté vertical (406) s'étendant sensiblement parallèlement à l'axe vertical (204, 402) et sensiblement parallèlement au premier côté vertical (404), et (C) une partie extrême terminale (410) comprenant au moins un premier segment périphérique (412), un deuxième segment périphérique (414) et un troisième segment périphérique (416), le premier segment périphérique (412), le deuxième segment périphérique (414) et le troisième segment périphérique (416) de la partie extrême terminale (410) ayant sensiblement les mêmes dimensions que le premier segment périphérique (312), le deuxième segment périphérique (314) et le troisième segment périphérique (316) de la première partie inférieure terminale (310), et en outre a) le premier segment périphérique (412) s'étendant à partir du premier panneau vertical (404) à un premier angle intérieur (418), b) le deuxième segment périphérique (414) s'étendant à partir du second côté vertical (406) à un second angle intérieur (420), le second angle intérieur (420) concordant avec le premier angle intérieur (418), et en outre le premier angle intérieur (418) et le second angle intérieur (420) de la partie extrême terminale (410) concordant sensiblement avec le premier angle intérieur (318) et le second angle intérieur (320) de la première partie inférieure terminale (310), et c) le troisième segment périphérique (316) connectant le premier segment périphérique (412) et le deuxième segment périphérique (414) de sorte que le troisième segment périphérique (416) soit perpendiculaire à l'axe vertical (204, 402) ;
découper une bande d'élastomère thermoplastique (510) ; et
souder thermiquement la partie extrême terminale (410) du panneau extrême (202, 400) à la première partie inférieure terminale (310) du panneau inférieur (206, 300) en chauffant la bande d'élastomère thermoplastique (510).

4. Procédé selon la revendication 3, dans lequel la bande d'élastomère thermoplastique (510) comprend du polyuréthane thermoplastique.

5. Procédé selon la revendication 4, dans lequel le polyuréthane thermoplastique comprend du polyuréthane thermoplastique à base de polyester ou du polyuréthane thermoplastique à base de polyéther.

6. Procédé selon la revendication 3, dans lequel la bande d'élastomère thermoplastique (510) comprend en outre une fossette de réception (706) qui s'étend le long de la longueur de la bande d'élastomère thermoplastique (510) dans un aspect intérieur (104), et une protubérance (708) correspondante qui s'étend le long de la longueur de la bande d'élastomère thermoplastique (510) dans un aspect extérieur (102), et de préférence dans lequel la première partie inférieure terminale (310) et la partie extrême terminale (410) sont en butée contre la fossette de réception (706) le long de la longueur de la bande d'élastomère thermoplastique (510) dans l'aspect intérieur (104).

7. Procédé selon la revendication 3, dans lequel la bande d'élastomère thermoplastique (510) est colorable.

8. Procédé selon la revendication 3, dans lequel le panneau inférieur (206, 300) et le panneau extrême (202, 400) sont revêtus sur un côté d'un revêtement de polyuréthane, et le revêtement de polyuréthane étant de préférence sur l'extérieur (102) du sac (100).

9. Structure tridimensionnelle selon la revendication 1, dans laquelle :
la structure est un sac (100) avec des jointures soudées ; le premier côté longitudinal (304) s'étend sensiblement parallèlement à l'axe longitudinal (208, 302) ;
le second côté longitudinal (306) s'étend sensiblement parallèlement à l'axe longitudinal (208, 302) et sensiblement parallèlement au premier côté longitudinal (304) ;
le second angle intérieur (320) de la première partie inférieure terminale (310) concorde avec le premier angle intérieur (318) de la première partie inférieure terminale (310) ;
le troisième segment périphérique (316) de la première partie inférieure terminale (310) est perpendiculaire à l'axe longitudinal (208, 302) ;
le premier côté vertical (404) s'étend sensiblement parallèlement à l'axe vertical (204, 402) ;
le second côté vertical (406) s'étend sensiblement parallèlement à l'axe vertical (204, 402) et sensiblement parallèlement au premier côté vertical (404) ;
le second angle intérieur (420) de la partie extrême terminale (410) concorde avec le premier angle intérieur (418) de la partie extrême terminale (410) ;
le troisième segment périphérique (416) de la première partie inférieure terminale (310) est perpendiculaire à l'axe vertical (204, 402) ; et
l'élément de fixation (510) est une bande d'élastomère thermoplastique (510) qui soude thermiquement le premier segment périphérique (312) de la première partie inférieure terminale (310) au premier segment périphérique (412) de la partie extrême terminale (410), le deuxième segment périphérique (314) de la première partie inférieure terminale (310) au deuxième périphérique (414) de la partie extrême terminale (410), et le troisième segment périphérique (316) de la première partie inférieure terminale (310) au troisième segment périphérique (416) de la partie extrême terminale (410).
